# EUROPÄISCHE PATENTSCHRIFT

(11) **EP 0 872 299 B1**
(45) Veröffentlichungstag und Bekanntmachung des Hinweises auf die Patenterteilung: **20.03.2002**
(21) Anmeldenummer: 98106752.3
(22) Anmeldetag: 14.04.1998
(51) Int. Cl.: B23H 7/06

(54) **Funkenerosionsmaschine mit wenigstens einer Drahtelektrode und Verfahren zur Bearbeitung eines Werkstücks in einer Funkenerosionsmaschine**
Electric discharge machine with at least one wire-shaped electrode and method of processing a workpiece in an electric discharge machine
machine d'étincelage avec au moins un fil-électrode et procédé de traitement d'une pièce à usiner dans une machine d'étincelage

(30) Priorität: 15.04.1997 DE 19715687
(43) Veröffentlichungstag der Anmeldung: 21.10.1998
(73) Patentinhaber: AGIE SA, 6616 Losone (CH)
(72) Erfinder: Boccadoro, Marco, Ing. ETH, 6653 Verscio (CH); Beltrami, Ivano, Dr., 6654 Cavigliano (CH)
(74) Vertreter: von Samson-Himmelstjerna, Friedrich R., Dipl.-Phys.

(56) Entgegenhaltungen:
- DE-U- 8 613 193
- US-A- 3 830 996
- US-A- 4 727 278
- US-A- 5 438 178
- PATENT ABSTRACTS OF JAPAN vol. 010, no. 134 (M-479), 17.Mai 1986 & JP 60 259324 A (MITSUBISHI DENKI KK), 21.Dezember 1985,

## Beschreibung

Die Erfindung betrifft eine Funkenerosionsmaschine mit einer zwischen zwei Führungsköpfen verlaufenden Drahtelektrode. Sie betrifft außerdem ein Verfahren zur Bearbeitung eines Werkstückes mittels einer solchen Funkenerosionsmaschine.

Funkenerosionsmaschinen dienen der hochpräzisen Bearbeitung elektrisch leitfähiger Werkstücke. Dabei wird mittels einer Elektrode und elektrischem Funkenüberschlags Material abgetragen.

Drahtelektroden werden verwendet, um z.B. zylindrische oder konische Schnitte auszuführen und auf diese Weise zum Beispiel Stempel oder Matrizen zu fertigen. Als Drahtelektrode wird üblicherweise ein Abschnitt eines durchlaufenden Drahtes zwischen zwei Führungsköpfen bezeichnet. Eine im Drahtlaufsystem erzeugte Zugspannung sorgt dabei für eine im wesentlichen geradlinige Gestalt der Elektrode.

Unter dem Begriff "Führungskopf" ist eine Einheit zu verstehen, welche zur räumlichen Positionierung der Elektrode in ihrer Gesamtheit bewegt wird. Im Inneren einer solchen Einheit ist regelmäßig die eigentliche Drahtführung ausgebildet.

Die Führungsköpfe sind beispielsweise in je einem Kreuzschlitten gelagert. Sie können infolgedessen voneinander unabhängig in zwei üblicherweise parallen X-Y-Ebenen verschoben werden. Dabei ist es zweckmäßig, wenn zusätzlich wenigstens einer der Kreuzschlitten senkrecht zu diesen Ebenen in Z-Richtung verlagert werden kann. Auf diese Weise ist es möglich, in einem gewissen Bereich jede beliebige räumliche Lage der Drahtelektrode einzustellen.

Zylindrische Schnitte erhält man in einer derart ausgebildeten Funkenerosionsmaschine, indem man beide Führungsköpfe in ihren jeweiligen Führungsebenen synchron auf gleichartigen Bahnen verschiebt. Konische Schnitte erhält man hingegen durch eine asynchrone und/oder ungleichartige Verschiebung der Führungsköpfe.

Bei zylindrischen Schnitten liegen die Führungsköpfe also im allgemeinen einander stets exakt in Z-Richtung gegenüber. Bei konischen Schnitten sind sie hingegen relativ zueinander versetzt.

Bei allen Schnitten kommt es lediglich auf die Relativbewegung zwischen der Drahtelektrode und dem Werkstück an. Zylindrische Schnitte erhält man also beispielsweise auch, wenn man das Werkstück in einer X-Y-Richtung gegen eine parallel zur Z-Achse feststehende Drahtelektrode verschiebt; konische Schnitte, wenn man das Werkstück und einen Führungskopf bewegt, während der andere Führungskopf fixiert ist. Auch ist es möglich, beide Führungsköpfe lediglich um je eine zur Z-Achse querliegende Achse zu schwenken und außerdem um die Z-Achse zu drehen (dabei beschreiben die Drahtführungen beispielsweise je eine Kreisbahn um die Z-Achse).

Für die vorliegende Erfindung ist es unerheblich, ob die Funkenerosionsmaschine auf eine solche oder auch eine andere Weise ausgebildet ist. Wesentlich ist nur der Umstand, daß bei all diesen Ausführungsformen die Führungsköpfe bei konischen Schnitten zueinander versetzt liegen oder jedenfalls in unterschiedliche Richtungen weisen. Aus Gründen der Einfachheit wird daher in der Beschreibung stets ausschließlich auf die anschauliche Variante mit zwei Kreuzschlitten Bezug genommen.

Im Falle eines konischen Schnittes weisen die Ausgänge der Führungsköpfe für die Drahtelektrode also üblicherweise in bzw. gegen die Z-Richtung, während die Drahtelektrode selbst schräg dazu verläuft. Hieraus resultieren vor allem zwei Probleme.

Zum einen weist der Erodierdraht eine gewisse Steifigkeit auf. Infolgedessen verläßt er die Führungsköpfe zunächst jeweils in bzw. entgegen der Z-Richtung. Erst im weiteren Verlauf wird er zum jeweils gegenüberliegenden Führungskopf hingebogen. Die Drahtelektrode verläuft infolgedessen nicht mehr gerade, sondern leicht gekrümmt (dies wird in Fig.10 veranschaulicht).

Zum anderen wird die Spülung der Drahtelektrode gestört: im Idealfall sollte die Spülung durch einen koaxialen Strahl erfolgen, welcher symmetrisch zur Drahtelektrode verläuft. In der vorstehend geschilderten Situation ist dies jedoch nicht mehr möglich. Dies führt zu einer Ablenkung der Drahtelektrode aus ihrer Bahn durch einen asymetrischen Spülstrahl. Auch ist die Kühlwirkung des Spülstrahls nicht mehr optimal.

Die deutsche Patentschrift DE 3041612 C1 (AGIE) versucht diesen Problemen durch eine kardanische Aufhängung der Führungsköpfe abzuhelfen. Auf diese Weise ist es möglich, die Führungsköpfe in die Richtung der Drahtelektrode zu schwenken. Allerdings ist eine solche Konstruktion verhältnismäßig aufwendig und beansprucht viel Raum. Auch ist es schwierig, die Konstruktion hinreichend steif auszuführen. Infolgedessen ist es sehr kostspielig, gemäß dieser Lehre den heutigen Präzisionsstandards für Erosionsmaschinen zu genügen.

Einen ähnlichen Weg geht die DE 3201544 A1 (EROWA), indem sie die Führungsköpfe schwenkbar lagert und über ein Koppelgetriebe nach der Art eines Storchenschnabels miteinander koppelt. Auf diese Weise reduziert sich der Steuerungsaufwand, was beim heutigen Entwicklungsstand der Steuerungselektronik jedoch nahezu unerheblich ist. Im übrigen vergrößert eine solche Konstruktion die zur vorigen Druckschrift genannten Nachteile. Dies gilt insbesondere hinsichtlich der Steifigkeitsprobleme.

Die DE 4228330 A1 befaßt sich mit offenen Drahtführungen, welche für konische Schnitte eingesetzt werden. Dabei werden eine oder beide Drahtführungen stets so gedreht, daß der Draht immer eine definierte Lage in der Drahtführung innehat (etwa bei V-Führungen im Grund des V's). Zu diesem Zweck ist bevorzugt wenigstens einer der Bearbeitungsköpfe, in welchen die Drahtführungen angeordnet sind, zylindrisch ausgebildet. Die Drehung der Gesamtheit aus Bearbeitungskopf und Drahtführung erfolgt um den Draht oder die Drahtachse. Die Drahtführungen selbst weisen schließlich eine sich verändernde Krümmung in der Querschnittskontur auf.

Die DE 8613193 U1 beschreibt eine Vorrichtung zum Orientieren der Führungsköpfe in der Richtung der Drahtelektrode. Hierzu werden hydraulische Kraftzylinder eingesetzt. Bevorzugt sind an den Führungsköpfen jeweils zwei in Drahtrichtung übereinander liegende Gelenkkugeln ausgebildet. Offenbar sind beide Gelenkkugeln jeweils kugelbar gelagert. Hierbei ist die Lagerung der näher am Werkstück liegenden Gelenkkugel fixiert, während - vereinfacht ausgedrückt - die verbleibende Lagerung nach Art eines Kreuzschlittens beweglich ist (tatsächlich werden entsprechende Relativbewegungen durchgeführt). Besagter "Kreuzschlitten" wird von den hydraulischen Kraftzylindern bewegt.

Die US 4460816 schlägt einen Mechanismus mit zwei Drehgelenken vor, um die Orientierung eines oberen Führungskopfes längs der Längsachse des Drahtes zu gewährleisten. Die beiden Drehgelenke sind mechanisch derart gekoppelt, daß sie jeweils spiegelsymmetrisch zueinander (relativ zu einer zwischen Ihnen liegenden Ebene) ausgelenkt werden.

Die US 4727278 beschreibt unter anderem einen piezoelektrischen Antrieb zur Positionierung (Translation und Drehung) einer Kugel.

Der CD-ROM PAJ: Patent Abstracts of Japan. JP 08229742 A bzw. der JP 8-229742 A ist - soweit ersichtlich - unter anderem eine "inch worm" Struktur in einer Elektrodenzufuhr zu entnehmen.

Die DE 2954584 C2 befaßt sich schließlich mit einem System zur Regelung der Drahtspannung in einer Erosionsmaschine. Dabei wird insbesondere auch der Draht in Vibration versetzt.

Die JP 60-259324 offenbart kugelförmige Führungsköpfe für die Drahtelektrode in einer Funkenerosionsmaschine, welche frei drehbar mit einem bestimmten Abstand zu bzw. in einer konkaven Halterung gelagert sind. Ein Arbeitsfluid wird in die selbe Richtung wie die Verlaufsrichtung der Elektrode gespritzt. Die entsprechende Ausrichtung der drehbaren Führungsköpfe erfolgt durch Spannungskräfte an der Elektrode. Die Elektrode wird im Führungskopf durch ein ring- und zylinder- oder konusförmiges Führungsteil geführt, welches einen größeren Durchmesser als die Elektrode hat. Anstelle von frei beweglichen Kugelköpfen können für die Ausrichtung der Düsen für den Fluidstrahl auch nicht näher beschriebene Detektoren verwendet werden.

Die US 5,438,178 beschreibt ein Verfahren zum funkenerosiven Schneiden mit Vor- und Nachschnitten.

Der US 3,830,996 ist eine Funkenerosionsmaschine zu entnehmen, bei welcher Mittel vorgesehen sind, um die Drahtelektrode in kreisförmige Bewegungen zu versetzen.

Die vorliegende Erfindung möchte eine verbesserte Drahtfunkenerosionsmaschine zur Verfügung stellen.

Sie erreicht dieses Ziel mit dem Gegenstand des Anspruchs 1.

Es wird also Wert auf eine konkrete äußere Form der Führungsköpfe gelegt, welche unmittelbar technisch genutzt werden kann. Die Führungsköpfe erhalten somit eine neue Funktionalität. Diese grundlegende Neuerung läßt sich bei geringem Aufwand kostengünstig umsetzen und ermöglicht ebenso wirkungsvolle wie einfache Abhilfe für die oben geschilderte Problematik.

Dabei sind wenigstens Teile der Lagerung als Antriebsmittel zur Kugeldrehung und/oder Fixierung des kugelartigen Führungskopfes ausgebildet. Auf diese Weise ist es möglich, die Führungsköpfe exakt nach der Achse der Drahtelektrode auszurichten.

Sofern in einer bevorzugten Ausführungsform eine offene Drahtführung verwendet wird, ergibt sich noch ein zusätzlicher erheblicher Vorteil:

Offene Drahtführungen sind beispielsweise als V-förmige Rille ausgebildet. Es können daher Drähte unterschiedlichen Durchmessers in sie hinein gelegt werden. Allerdings kann mit ihrer Hilfe im wesentlichen nur aus einer Richtung (von der Spitze des V her) eine Kraft auf den Draht übertragen werden. Während der Bearbeitung eines Werkstückes müssen sie daher ständig dementsprechend um den Draht herum bewegt werden. Diese Aufgabe kann der mit Antriebsmitteln ausgestatte kugelartige Führungskopf zusätzlich übernehmen. Die Notwendigkeit einer eigenen Konstruktion, wie etwa in der CH 670590 (CHARMILLES) vorgeschlagen, entfällt.

Im Ergebnis können also gleichzeitig eine offene Drahtführung relativ zum Draht optimal orientiert und die Führungsköpfe zur Achse der Drahtelektrode hin ausgerichtet werden.

Vorzugsweise sind als Antriebsmittel piezokeramische Aktuatoren vorgesehen. Solche Aktuatoren können bei geringer Geschwindigkeit ein hohes Drehmoment aufbringen. Sie sind zudem besonders präzise, klein und unkompliziert.

Bevorzugt sind die piezokeramischen Aktuatoren derart ausgebildet, daß sie Drehbewegungen wenigstens eines Führungskopfes durch Reibungskräfte bewirken. Dies erlaubt eine besonders einfache Konstruktion eines kugelartigen Motors.

In einem weiteren bevorzugten Ausführungsbeispiel bilden eine Reihe von Piezokeramiken einen Motor des Typs Inchworm oder Walking Drive. Hierbei handelt es sich um bereits ausgereifte piezokeramische Aktuatoren, welche in der vorliegenden Erfindung besonders gut verwendet werden können.

In einem alternativ oder zusätzlich bevorzugten Ausführungsbeispiel sind die piezokeramischen Aktuatoren derart ausgebildet, daß sie Translationsbewegungen wenigstens eines Führungskopfes durch Veränderung ihrer räumlichen Gestalt bewirken. Auf diese Weise können auch winzige (im Mikrometerbereich liegende) Translationsbewegungen der Führungsköpfe vorgenommen werden. Somit ist es beispielsweise möglich, kleine Ausrichtungsfehler am Werkstück mit geringem Aufwand zu kompensieren.

Bevorzugt sind die piezokeramischen Aktuatoren mit wenigstens einem Drahtlagesensor gekoppelt. Dies ermöglicht ein besonders schnelles (Zeitkonstante im Bereich von Mikrosekunden, bisher üblich: Tausendstelsekunden) Regelsystem, welches den Abstand zwischen der Drahtelektrode und dem Werkstück konstant hält. Hiermit können beispielsweise auch seitliche, durch die Kraft des Erosionsprozesses hervorgerufene, ungewollte Bewegungen der Drahtelektrode ausgeglichen werden. Dies reduziert die Gap-Breite und erhöht gleichzeitig die Präzision und Arbeitsleistung der Erosionsmaschine, da das Werkstück verstärkt in Schnittrichtung abgetragen wird. Auch ist es möglich, die Aktuatoren der Führungsköpfe als "Serien"-Motoren in einem Servosystem einzusetzen, welches den Abstand zwischen dem Erodierdraht und dem Werkstück konstant hält.

Die piezokeramischen Aktuatoren sind weiterhin bevorzugt zur Erzeugung einer Drahtvibration ausgelegt. Hierdurch können die Spülbedingungen für die Drahtelektrode verbessert werden, wodurch eine erhöhte Prozeßstabilität erreicht wird. Folglich ergibt sich eine höhere Abtragsrate bzw. Schnittgeschwindigkeit und unter Umständen auch eine verbesserte Oberflächengüte.

Schließlich ermöglicht eine erfindungsgemäße Funkenerosionsmaschine ein Verfahren nach Anspruch 9.

Solche Verfahren kommen beispielsweise dann in Betracht, wenn die Drahtsteifigkeit und die Spülung der Drahtelektrode von geringer Bedeutung sind. Auch gibt es Erosionsvorgänge, etwa im Mikroerosionsbereich, bei welchen die Bewegungen so klein sind, daß die oben geschilderten Nachteile vernachlässigbar bleiben. In beiden Fällen ermöglichen die erfindungsgemäßen Verfahren besonders einfache und dementsprechend kostengünstige Maschinenkonstruktionen. Zugleich kann jedenfalls im Mikroerosionsbereich eine hohe Präzision gewährleistet werden.

Die Erfindung wird anhand von Ausführungsbeispielen und der beiliegenden Zeichnung noch näher erläutert. In der Zeichnung ist:
- Fig.1: ein Längsschnitt durch einen erfindungsgemäßen Führungskopf;
- Fig.2: ein Querschnitt durch eine offene Drahtführung;
- Fig.3: ein Querschnitt durch eine geschlossene Drahtführung;
- Fig.4: ein Längsschnitt durch einen erfindungsgemäßen Führungskopf ohne Antriebsmittel;
- Fig.5: ein Längsschnitt durch einen erfindungsgemäßen Führungskopf mit Antriebsmitteln;
- Fig.6: eine perspektivische Darstellung des Führungskopfes aus Fig.5;
- Fig.7, Fig.7a-e: je eine Draufsicht auf einen weiteren erfindungsgemäßen Führungskopf mit Antriebsmitteln;
- Fig.8: eine Teildarstellung einer Funkenerosionsmaschine, welche nach einem erfindungsgemäßen Verfahren arbeitet;
- Fig.9: eine weitere Teildarstellung einer Funkenerosionsmaschine, welche nach einem erfindungsgemäßen Verfahren arbeitet; und
- Fig.10: eine Teildarstellung einer herkömmlichen Funkenerosionsmaschine.

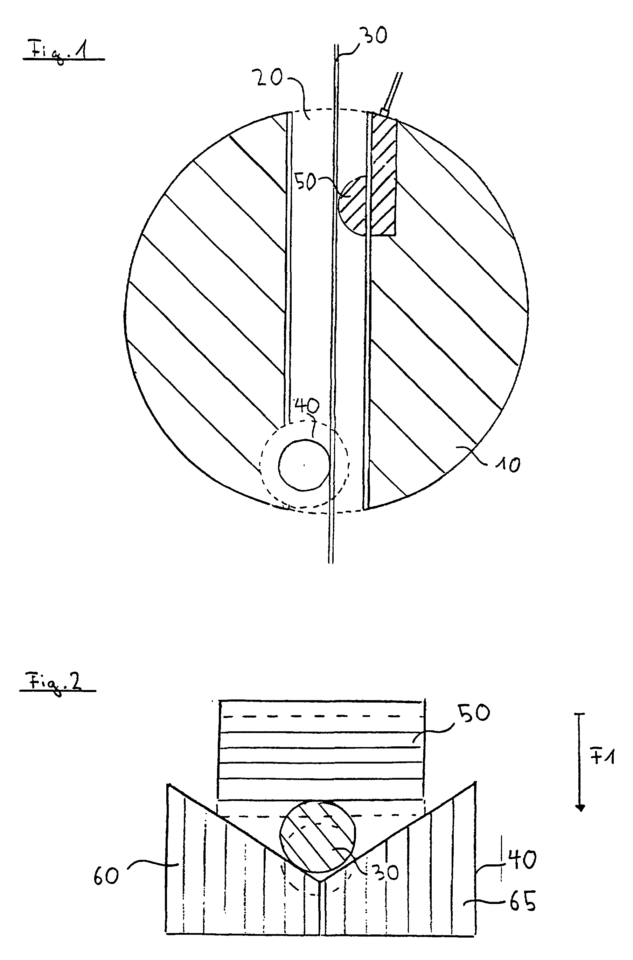

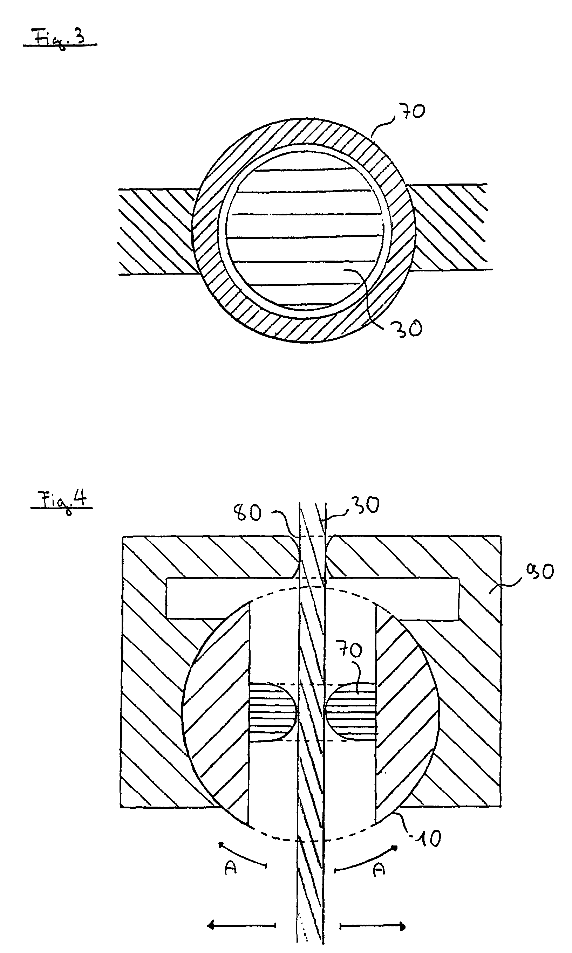

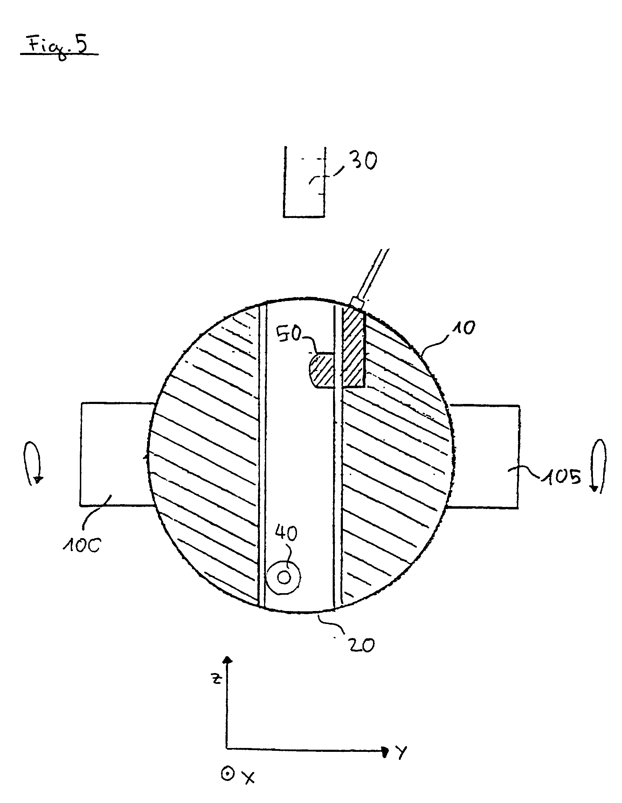

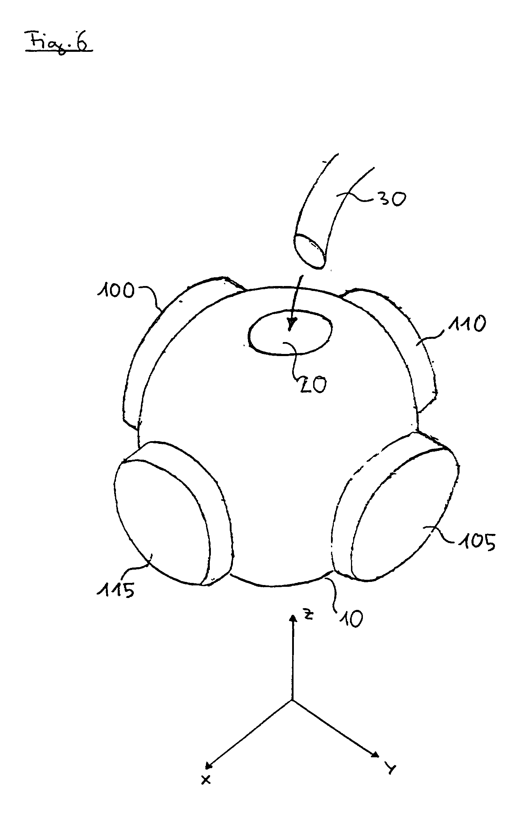

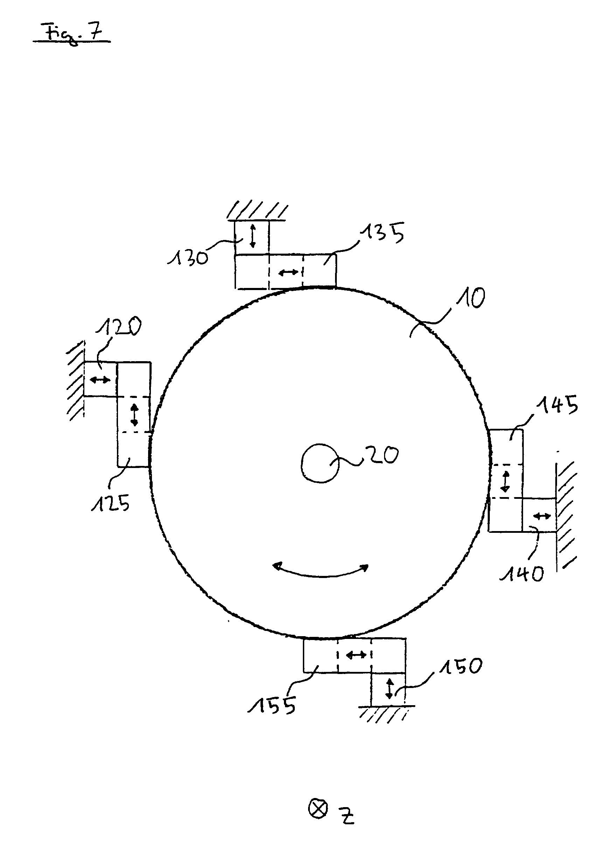

Fig.1 zeigt einen kugelartig ausgebildeten Führungskopf 10. In seinem Zentrum ist ein Durchgang 20 ausgebildet. Durch den Durchgang 20 wird ein Draht 30 geführt. Als Führung dient eine offene Drahtführung 40. Zusätzlich wird der Draht 30 durch eine Stromzuführung 50 stabilisiert.

Die offene Drahtführung 40 ist in Fig.2 im Querschnitt dargestellt. Der Draht 30 liegt an zwei Backen 60,65 welche zusammen eine V-Form bilden. Auf diese Weise können Drähte 30 unterschiedlichen Durchmessers angelegt werden. Die gemäß Fig.1 weiter oben plazierte Stromzuführung 50 übt eine Kraft F1 auf den Draht 30 aus. Hierdurch wird er im Zentrum der offenen Drahtführung 40 positionsgenau gehalten. Die offene Drahtführung 40 kann, wie in Fig.1 angedeutet, als Umlenkrolle mit V-förmiger Führungsrille ausgebildet sein. Möglich ist aber auch eine feststehende Führungsrinne.

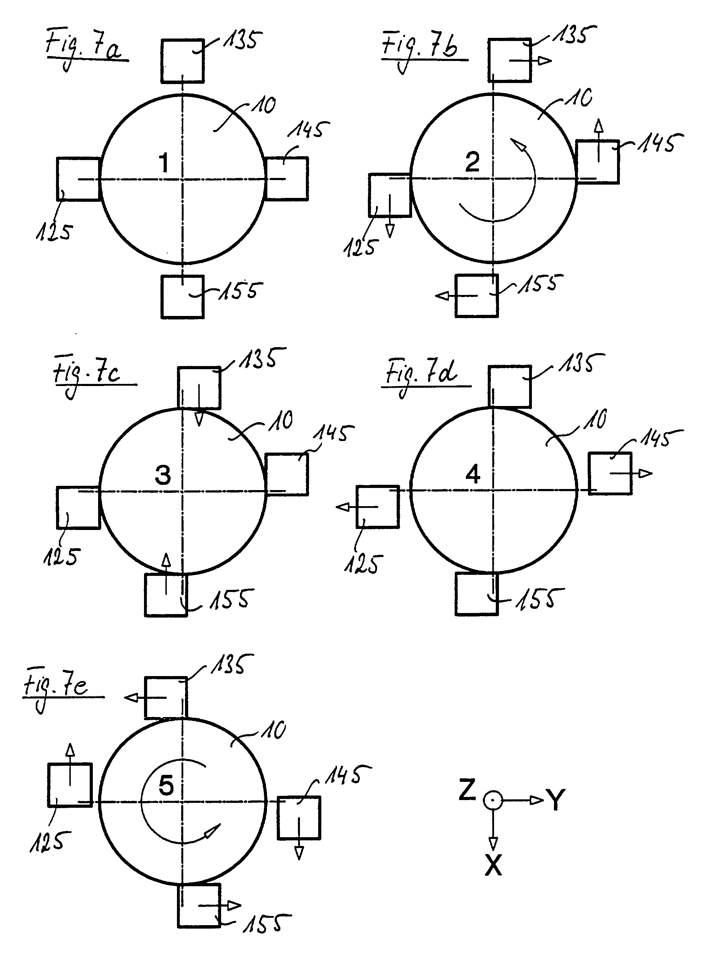

Fig.3 zeigt eine geschlossene Drahtführung 70, welche anstelle der offenen Drahtführung 40 verwendet werden kann. Sie ist als Ring ausgebildet, in dessen Zentrum der Draht 30 geführt wird.

Die offene Drahtführung 40 hat gegenüber der geschlossenen Drahtführung 70 den Vorteil, daß sie für unterschiedliche Drahtdurchmesser geeignet ist. Andererseits hat sie den Nachteil, daß sie im wesentlichen nur aus einer Richtung (von der Spitze der V-Kerbe her) eine Kraft auf den Draht 30 übertragen kann. Infolgedessen muß sie während der Bearbeitung eines Werkstücks laufend um den Draht 30 herumbewegt werden (andernfalls würde der Draht 30 während der Bearbeitung eines Werkstückes die Drahtführung 40 verlassen).

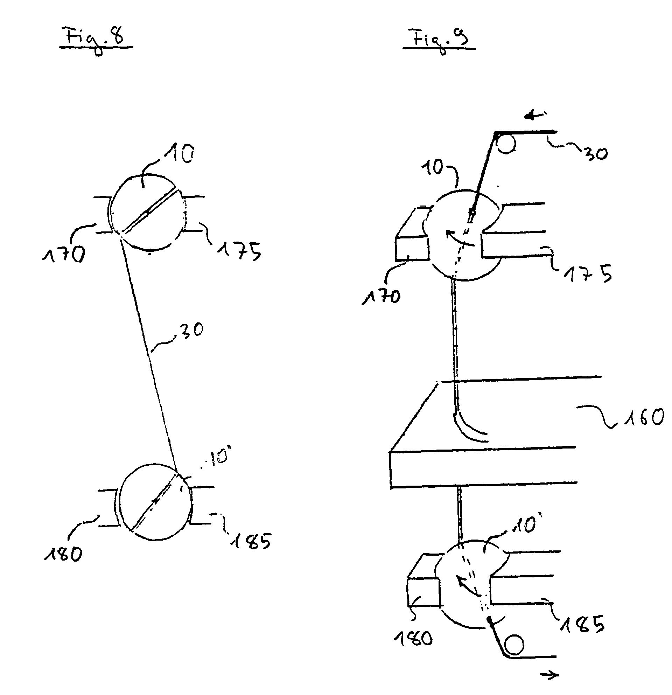

Fig.4 zeigt einen kugelartigen Führungskopf 10, welcher ohne Antriebsmittel eingesetzt wird. Er ist in einer Lagerung 90 in einer für Kugeldrehungen geeigneten, an sich bekannten Weise gelagert und eignet sich besonders für eine geschlossene Drahtführung 70. Der Draht 30 durchsetzt zunächst einen Einlaß 80 in einer Lagerung 90. Auf diese Weise wird er bezüglich des Kugelmittelpunktes zentriert. Im Inneren des kugelartigen Führungskopfes wird der Draht 30 dann auf halber Strecke durch die geschlossene Drahtführung 70 geführt. Die Stromzufuhr erfolgt über die Drahtführung 70.

In Fig. 4 wird lediglich der obere Führungskopf 10 dargestellt. Am unteren Ende der Drahtelektrode kann ein gleichartiger Führungskopf 10' spiegelsymmetrisch angeordnet werden. Sofern geringere Korrekturen der Drahtkrümmung ausreichen, kann dort aber auch ein herkömmlicher Führungskopf verwendet werden.

Die beiden Führungsköpfe 10,10' können beispielsweise mittels je eines Kreuzschlittens (nicht dargestellt) räumlich positioniert werden, welcher jeweils an der Lagerung 90 angreift.

In einer beispielhaften Situation (nicht dargestellt) liegen zwei Führungsköpfe 10,10' einander zunächst in Z-Richtung exakt gegenüber. Dann wird der obere Führungskopf in positiver X-Richtung (nach rechts) und der untere Führungskopf in negativer X-Richtung (nach links) verschoben. Da im Draht 30 eine Zugspannung vorhanden ist, entsteht dabei in den beiden Führungsköpfen 10,10' jeweils ein Drehmoment um die Y-Achse und im Uhrzeigersinn.

Dem wirken eine Reibungskraft aufgrund der Kugellagerung 90 und eine Zugkraft infolge der Drahtpositionierung an den Einlässen 80,80' außerhalb des Elektrodenbereichs entgegen. Im Ergebnis stellt sich also nach einer Kugeldrehung A eine Gleichgewichtslage ein, in welcher die Führungsköpfe 10,10' zumindest teilweise nach der Drahtelektrode 30 ausgerichtet sind.

In Fig.5-6 wird ein kugelartiger Führungskopf 10 mit vier Antriebsmitteln 100,105,110,115 dargestellt. Der Draht 30 durchsetzt den Führungskopf 10 in Z-Richtung. An der Außenoberfläche des Führungskopfes 10 greifen die vier Antriebsmittel 100-115 an. Diese sind einander paarweise gegenüber längs einer X- bzw. einer Y-Achse angeordnet (X-, Y- und Z-Richtungen sind dabei zueinander orthogonal). Die Wirkung der Antriebsmittel 100-115 wird über Reibungskräfte auf die Kugeloberfläche übertragen.

Als Antriebsmittel 100-115 eignen sich besonders gut piezokeramische Aktuatoren. Derartige Aktuatoren werden beispielsweise von Kawasaki Heavy Industries für einen kugelartigen Piezo-Keramik-Motor verwendet (siehe: "Piezoelectrically Driven Rotational Joint with Three Degrees of Freedom" in "Micromachine", Nr.14/1996, Verlag: Takayuki Hirano, MMC, 5-F, Niikura Building, 2-2, Kandatsukasacho, Chiyoda-ku, Tokyo 101, Japan). Die Ausgestaltung piezokeramischer Aktuatoren in einem kugelartigen Ultraschallmotor wird ferner von Shigeki Toyama ("Development of Spherical Ultrasonic Motor", in: CIRP-Annalen, Vol.45/1/1996, S.27-30, mit weiteren Nachweisen) beschrieben; ergänzend wird noch hingewiesen auf: Kumada, A., 1985, "A piezoelectric ultrasonic motor, Jpn. J. Appl. Phys. 24:739-744; Toyama, S., Hatae, S., 1992, "Development of a new ultrasonic for a robot manipulator by an ultrasonic motor", J. Japan robot association, 10-6:771-780; Toyama, S. et al., 1991, "Development of a spherical ultrasonic motor for a robot manipulator", Proc. of robot and mechatronics symposium 94-95 (A); Toyama, S. et al., 1994, "Multi degree of freedom Spherical Ultrasonic Motor", Proc. of IECON'94 Bologna, 899-904 (A).

Je zwei einander gegenüberliegende piezokeramische Aktuatoren 100,105 bzw. 110,115 erzeugen simultan ein gleichgerichtetes Drehmoment um die Y- bzw. X-Achse. Gleichzeitig kann die Reibung zwischen den jeweils verbleibenden beiden Aktuatoren 110,115 bzw. 100,105 und dem kugelartigen Führungskopf 10 reduziert oder aufgehoben werden. Es ist jedoch auch möglich, beide Aktuatorenpaare simultan zu betreiben (vgl. z.B. Shigeki Toyama, aaO., S.28). Durch einen abwechselnden oder einen simultanen Einsatz beider Aktuatorenpaare 100,105 bzw. 110,115 kann so der Durchgang 20 des kugelartigen Führungskopfes 10 in jede beliebige Neigung bezüglich der Z-Achse gebracht werden.

Die Funktionsweise piezokeramischer Aktuatoren wird ausführlich in den oben genannten Druckschriften beschrieben. Dort finden sich auch Nachweise weiterer Beschreibungen. Ihr Grundprinzip basiert auf der Verformbarkeit piezokeramischer Elemente durch elektrische Spannungen.

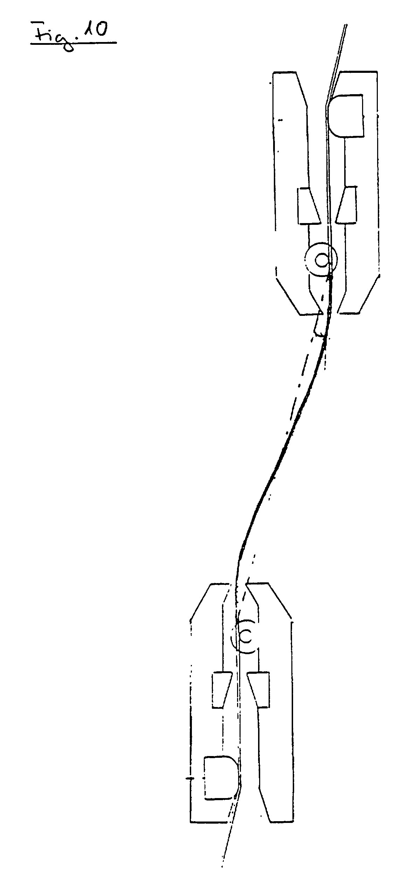

Im Falle einer offenen Drahtführung 40 muß der Draht 30 - wie oben ausgeführt - stets im Zentrum der V-Kerbe 60,65 gehalten werden. Zu diesem Zweck muß es möglich sein, den Führungskopf 10 zusätzlich um die Z-Achse zu drehen. Fig.7 zeigt einen hierfür geeigneten Antrieb, welcher ebenfalls aus piezokeramischen Elementen 120,125, 130,135, 140,145, 150 und 155 gebildet wird.

Die piezokeramischen Elemente 120-155 sind in diesem Fall als Quader ausgebildet, deren Länge verändert werden kann. Derartige Elemente sind beispielsweise aus der Druckschrift "Ultraprecision Feed System Based on Walking Drive" (Toshimi Moriwaki et. al., Annals of the CIRP Vol. 45/1/1996, S.505 ff) bekannt. Sie werden dort verwendet, um einen Motor des Typs Inch Worm oder Walkingdrive zu bilden.

Je zwei solche piezokeramische Elemente 120,125 bzw. 130, 135 bzw. 140,145 bzw. 150,155 sind rechtwinklig angeordnet. Jedes dieser Paare ist über ein Element 120,130,140,150 mit einer den kugelartigen Führungskopf 10 umgebenden Wand verbunden (zur besseren Übersichtlichkeit werden diese Elemente 120,130,140,150 im folgenden als Wandelemente bezeichnet). Das jeweils verbleibende Element 125,135,145,155 liegt tangential am kugelartigen Führungskopf 10 an (im folgenden: Tangentialelement).

Wenn eines der Wandelemente 120,130,140,150 verkürzt wird, entfernt sich das jeweils zugehörige Tangentialelement 125,135,145,155 von dem Führungskopf 10. Umgekehrt wird das Tangentialelement 125,135,145,155 durch eine Ausdehnung des Wandelementes 120,130,140,150 wieder an den Führungskopf 10 herangeführt.

Wenn ein Tangentialelement 125,135,145,155 am Führungskopf 10 anliegt und seine Länge verändert, wird über Reibungskräfte eine Tangentialbeschleunigung auf den Führungskopf 10 übertragen. Infolgedessen wird dieser in eine Drehbewegung versetzt.

Die Ausmaße einer solchen Längenänderung eines piezokeramische Elementes sind jedoch verhältnismäßig gering. Um dessenungeachtet eine gleichmäßige und beliebig große Drehung des kugelartigen Führungskopfes 10 zu erhalten, wirken mehrere aus je einem Wand- und einem Führungselement gebildete Paare zusammen. Um die Beschreibung dieses Zusammenwirkens anschaulicher zu machen, wird im folgenden auf das Bild einer analogen Uhr zurückgegriffen:

Rund um den kugelartigen Führungskopf 10 sind vier Paare aus je einem Tangentialelement 125,135,145,155 und einem dazu rechtwinkligen Wandelement 120,130,140,150 angeordnet. Dabei ist je ein Paar bei 3 Uhr, 6 Uhr, 9 Uhr und 12 Uhr plaziert. Die Tangentialelemente erstrecken sich von "kurz vor drei" bis "kurz nach drei", von "kurz vor sechs" bis "kurz nach sechs", u.s.w.. Beim 3-Uhr-Paar greift das Wandelement 140 "kurz nach drei" am Tangentialelement 145 an, beim 6-Uhr-Paar 150,155 "kurz vor sechs", beim 9-Uhr-Paar 120,125 "kurz nach neun" und beim 12-Uhr-Paar 130,135 "kurz vor zwölf".

Die Lagerung des kugelartigen Drahtführungskopfes 10 erfolgt in diesem Beispiel ausschließlich durch die Tangentialelemente 125,135,145,155. Es müssen daher zu jeder Zeit wenigstens zwei einander gegenüberliegende Tangentialelemente 125,145 bzw. 135,155 am kugelartigen Drahtführungskopf 10 angreifen. Wie unter diesen Bedingungen eine Linksdrehung ausgeführt werden kann, wird anhand der Figuren 7a bis 7e verdeutlicht. Hierbei werden die Wandelemente 120,130,140,150 zur Vereinfachung der Beschreibung nicht dargestellt. Ihre Funktion besteht darin, die Tangentialelemente 125,135,145,155 jeweils durch Kontraktion von dem kugelartigen Drahtführungskopf 10 wegzunehmen bzw. durch Ausdehnung die Tangentialelemente 125,135,145,155 an den kugelartigen Drahtführungskopf 10 heranzubringen. Ferner werden im folgenden die Tangentialelemente 125,135,145,155 der Einfachheit halber lediglich als 3-,6-,9- bzw. 12-Uhr-Element und der kugelartige Drahtführungskopf 10 als Führungskopf bezeichnet.

In einer Ausgangssituation (Fig. 7a) greifen das 9-Uhr- und das 3-Uhr-Element 125,145 am Führungskopf 10 an und sind in ihrer Längsausdehnung verkürzt. Das 12-Uhr- und das 6-Uhr-Element 135,155 berühren den Führungskopf 10 hingegen nicht und sind in ihrer Längsausdehnung gestreckt.

Nun werden das 9-Uhr- und das 3-Uhr-Element 125,145 entgegen dem Uhrzeigersinn ausgedeht (Fig. 7b). Infolgedessen vollführt der Führungskopf 10 eine Linksdrehung.

Gleichzeitig werden das 12-Uhr- und das 6-Uhr-Element zusammengezogen.

Sobald das 9-Uhr- und das 3-Uhr-Element 125,145 eine maximale Ausdehnung erreicht haben, werden das 12-Uhr- und das 6-Uhr-Element 135,155 an den Führungskopf 10 herangeführt (Fig. 7c). Zumindest während eines Augenblicks wird der Führungskopf 10 also von allen vier Tangentialelementen 125,135,145,155 gleichzeitig berührt.

Nachdem die Lagerung des Führungskopfes 10 durch das 12-Uhr- und das 6-Uhr-Element 135,155 gewährleistet ist, werden das 9-Uhr- und das 3-Uhr-Element 125, 145 von dem Führungskopf 10 entfernt (Fig. 7d).

Sodann wird die Linksdrehung des Führungskopfes 10 durch Ausdehnung des 12-Uhr- und des 6-Uhr-Elementes 135,155 fortgeführt (Fig. 7e). Währenddessen werden das 9-Uhr- und das 3-Uhr-Element wieder zusammengezogen.

Dieser Kreislauf wird fortgesetzt, bis die Drehung um die Z-Achse das gewünschte Ausmaß angenommen hat. Zu diesem Zeitpunkt werden alle piezokeramischen Elemente 120-155 angehalten. Der Fuhrungskopf 10 wird infolgedessen über Reibungskräfte in der erreichten Position fixiert.

Drehungen in die Gegenrichtung erfolgen nach demselben Prinzip.

Anstelle eines solchen "Zwei-Takt-Antriebs" können auch kontinuierliche Drehungen erzeugt werden. Im vorliegenden Beispiel wäre dies möglich, wenn zu jeder Zeit drei Tangentialelemente 125,135,145,155 am kugelartigen Drahtführungskopf 10 angreifen würden. In einer Ausgangssituation wäre dabei etwa je eines dieser drei Elemente 125,135,145,155 vollständig zusammengezogen, eines zu einem Drittel und eines zu zwei Dritteln ausgedehnt. Während der Drehung würden sich die drei Elemente mit gleicher Geschwindigkeit ausdehnen. Sobald das anfangs zu zwei Dritteln ausgedehnte Element seine volle Länge erreicht hätte, würde es durch das verbleibende vierte Element abgelöst, welches vollständig zusammengezogen sein müßte, usw.. Gegenüber dem oben beschriebenen "Zwei-Takt-Antrieb" würde eine solche Lösung mit vier Tangentialelementen 125,135,145,155 unterschiedliche Ausdehnungs- bzw. Kontraktionsgeschwindigkeiten erfordern. Dies wiederum könnte durch eine andere Anzahl von Elementen vermieden werden.

Bisher wurden anhand der Fig.5-6 bzw. Fig.7-7e erfindungsgemäße kugelartige Führungsköpfe 10 dargestellt, welche entweder um die X- und die Y-Achse oder nur um die Z-Achse drehbar sind. Beide Ausführungsformen können jedoch auch miteinander kombiniert werden.

Ferner ist es möglich, mittels piezokeramischer Elemente kleine Translationen des Führungskopfes 10 vorzunehmen. Zu diesem Zweck können entweder die vorhandenen piezokeramischen Elemente 100-155 entsprechend ausgebildet, oder aber zusätzliche Elemente verwendet werden. Beispielsweise könnte man die Wandelemente 120,130,140,150 vergrößern und zugleich die piezokeramischen Aktuatoren 100-115 (für Drehungen um die X- und Y-Achse) über zusätzliche Wandelemente (in den Figuren nicht dargestellt) mit einer den Führungskopf umgebenden Wand verbinden.

Eine Translation des Führungskopfes 10 in eine der Raumrichtungen erhält man etwa, indem man in Fig.7 gleichzeitig das 9-Uhr-Wandelement 120 verlängert und das gegenüberliegende 3-Uhr-Wandelement 140 verkürzt. Entsprechend müßten die verbleibenden Wandelemente gesteuert werden.

Eine solche Ausführungsform kann auch zweckmäßig mit einem Drahtlagesensor verbunden werden. Ein geeigneter Drahtlagesensor wird etwa in der DE 28 26 70 A1 (AGIE) beschrieben. Auf diese Weise können Abweichungen der Drahtelektrode 30 von ihrer Sollage schnell und präzise ausgeglichen werden.

Ferner ist es möglich, mittels der Aktuatoren eine künstliche Drahtvibration zu erzeugen. Hierdurch können der Spüleffekt erhöht und die Entsorgung von Erodierrückständen verbessert werden. Die Erzeugung hochfrequenter Bewegungen mittels piezokeramischer Aktuatoren wird beispielsweise in der Druckschrift "Ultraschall treibt Minimotore an" (Amo Nöldechen, Technische Rundschau 43/86, S. 112) beschrieben.

In Fig.8 und Fig.9 wird schließlich noch eine alternative Verwendungsmöglichkeit für kugelartige Führungsköpfe 10,10' dargestellt. Dabei werden die Führungsköpfe 10,10' jeweils zur Positionierung der Drahtelektrode 30 verwendet.

In Fig.8 wird mittels unterschiedlicher Neigung der Führungsköpfe 10,10' eine Konik eingestellt. In Fig.9 wird durch eine synchrone Drehbewegung beider Führungsköpfe ein zylindrischer Schnitt in einem Werkstück 160 ausgeführt.

In einer so ausgestalteten Drahtfunkenerosionsmaschine können bisher benötigte Maschinenachsen durch piezokeramische Aktuatoren 170,175,180,185 ersetzt werden. Dies ist vor allem im Bereich der Mikroerosion interessant. Dort bleiben die durch die Drahtsteifigkeit und eine asynchrone Spülung verursachten Fehler vernachlässigbar klein. Andererseits werden mit der Anzahl der herkömmlichen Maschinenachsen auch Steifigkeitsprobleme reduziert, welche von diesen Achsen herrühren.

## Patentansprüche

1. Funkenerosionsmaschine mit einer zwischen zwei Führungsköpfen (10, 10') verlaufenden Drahtelektrode (30), bei welcher
a) wenigstens einer, insbesondere jedoch beide Führungsköpfe (10, 10') im wesentlichen kugelartig ausgebildet sind;
b) der oder die im wesentlichen kugelartig ausgebildeten Führungsköpfe (10, 10') in einer für Kugeldrehungen geeigneten Weise gelagert sind; und
c) wenigstens Teile der Lagerung als Antriebsmittel zur Kugeldrehung und/oder Fixierung des kugelartigen Führungskopfes (10, 10') derart ausgebildet sind, daß die Lage des kugelartigen Führungskopfes (10, 10') relativ zu wenigstens einer, insbesondere jedoch zu allen drei Raumachsen (x, y, z) frei einstellbar ist.

2. Funkenerosionsmaschine nach Anspruch 1, bei welcher
a) wenigstens in einem der Führungsköpfe (10, 10') eine offene Drahtführung (40) vorgesehen ist; und
b) der Führungskopf (10, 10') um die Achse (z) der offenen Drahtführung (40) derart dreh- und fixierbar ist, daß die Drahtelektrode (30) im Zentrum der offenen Drahtführung (40) haltbar ist.

3. Funkenerosionsmaschine nach einem der vorstehenden Ansprüche, bei welcher als Antriebsmittel piezokeramische Aktuatoren (100-115, 120-155, 170-185) vorgesehen sind.

4. Funkenerosionsmaschine nach Anspruch 3, bei welcher die piezokeramischen Aktuatoren (100-115, 120-155, 170-185) derart ausgebildet sind, daß sie Drehbewegungen wenigstens eines Führungskopfes (10,10') durch Reibungskräfte bewirken.

5. Funkenerosionsmaschine nach Anspruch 3 oder 4, bei welcher eine Reihe von Piezokeramiken (120-155) einen Motor des Typs Inchworm oder Walking Drive bilden.

6. Funkenerosionsmaschine nach einem der vorstehenden Ansprüche, bei welcher die piezokeramischen Aktuatoren (100-115, 120-155, 170-185) derart ausgebildet sind, daß sie Translationsbewegungen wenigstens eines Führungskopfes (10,10') durch Veränderung ihrer räumlichen Gestalt bewirken.

7. Funkenerosionsmaschine nach einem der vorstehenden Ansprüche, bei welcher die piezokeramischen Aktuatoren (100-115, 120-155, 170-185) mit wenigstens einem Drahtlagesensor gekoppelt sind.

8. Funkenerosionsmaschine nach einem der vorstehenden Ansprüche, bei welcher die piezokeramischen Aktuatoren (100-115, 120-155, 170-185) zur Erzeugung einer Drahtvibration ausgelegt sind.

9. Verfahren zur funkenerosiven Bearbeitung eines Werkstückes (160) in einer Funkenerosionsmaschine nach einem der vorstehenden Ansprüche, bei welchem die angetriebenen kugelartigen Führungsköpfe (10, 10') zur Positionierung der Drahtelektrode (30) verwendet werden.

## Claims

1. An electrical discharge machine with a wire electrode (30) running between two guide heads (10, 10'), in which
a) at least one of the guide heads (10, 10'), but in particular both guide heads, have a substantially spherical construction;
b) the substantially spherical guide head or heads (10, 10') is/are mounted in a manner suitable for ball rotations; and
c) at least parts of the bearing are constructed as actuation means for the ball rotation and/or fixing of the spherical guide head (10, 10') in such a manner that the position of the spherical guide head (10, 10') is freely adjustable in relation to at least one, but in particular all three space axes (x, y, z).

2. An electrical discharge machine according to Claim 1, in which
a) an open wire guide (40) is provided at least in one of the guide heads (10, 10'); and
b) the guide head (10, 10') can be rotated around the axis (z) of the open wire guide (40) and fixed in such a manner that the wire electrode (30) can be retained in the centre of the open wire guide (40).

3. An electrical discharge machine according to one of the preceding Claims, in which piezoceramic actuators (100 - 115, 120 - 155, 170 - 185) are provided as actuation means.

4. An electrical discharge machine according to Claim 3, in which the piezoceramic actuators (100 - 115, 120 - 155, 170 - 185) are constructed in such a manner that they effect rotational movements of at least one guide head (10, 10') by frictional forces.

5. An electrical discharge machine according to Claim 3 or 4, in which a row of piezoceramics (120 - 155) form a motor of the inchworm or walking drive type.

6. An electrical discharge machine according to one of the preceding Claims, in which the piezoceramic actuators (100 - 115, 120 - 155, 170 - 185) are constructed in such a manner that they effect movements of translation of at least one guide head (10, 10') by changing their three-dimensional shape.

7. An electrical discharge machine according to one of the preceding Claims, in which the piezoceramic actuators (100 - 115, 120 - 155, 170 - 185) are coupled with at least one wire position sensor.

8. An electrical discharge machine according to one of the preceding Claims, in which the piezoceramic actuators (100 - 115, 120 - 155, 170 - 185) are designed to generate a wire vibration.

9. A process for the electrical discharge machining of a workpiece (160) in an electrical discharge machine according to one of the preceding Claims, in which the actuated spherical guide heads (10, 10') are used to position the wire electrode (30).

## Revendications

1. Machine d'étincelage avec un fil-électrode (30) qui passe entre deux têtes de guidage (10, 10') dans laquelle
a) au moins l'une des têtes de guidage, mais particulièrement les deux têtes de guidage (10, 10') sont essentiellement de forme sphérique ;
b) la ou les têtes de guidage essentiellement sphériques (10, 10') sont logées d'une manière adaptée aux rotations des billes ; et
c) au moins des parties du palier sont conçues sous forme de moyens d'entraînement pour la rotation des billes et/ou la fixation de la tête de guidage sphérique (10, 10'), de façon à ce que la position de la tête de guidage sphérique (10, 10') puisse être réglée librement de manière relative à au moins un, mais en particulier aux trois axes spatiaux (x, y, z).

2. Machine d'étincelage selon la revendication 1, dans laquelle
a) un système de guidage de fil ouvert (40) est prévu dans au moins l'une des têtes de guidage (10, 10'); et
b) la tête de guidage (10, 10') est rotative ou peut être fixée autour de l'axe (z) du système de guidage de fil ouvert (40) de manière à permettre la fixation du fil-électrode (30) au centre du système de guidage de fil ouvert (40).

3. Machine d'étincelage selon l'une quelconque des revendications précédentes, dans laquelle les moyens d'entraînement prévus sont des dispositifs d'actionnement piézocéramiques (110-115, 120-155, 170-185).

4. Machine d'étincelage selon la revendication 3, dans laquelle les dispositifs d'actionnement piézocéramiques (110-115, 120-155, 170-185) sont conçus de manière à ce que les mouvements de rotation d'au moins une tête de guidage (10, 10') soient provoqués par des forces de frottement.

5. Machine d'étincelage selon la revendication 3 ou 4, dans laquelle une série de piézocéramiques (120-155) forme un moteur de type Inchworm ou Walking Drive.

6. Machine d'étincelage selon l'une quelconque des revendications précédentes, dans laquelle les dispositifs d'actionnement piézocéramiques (110-115, 120-155, 170-185) sont conçus de manière à provoquer des mouvements de translation d'au moins une tête de guidage (10, 10') par la modification de leur forme dans l'espace.

7. Machine d'étincelage selon l'une quelconque des revendications précédentes, dans laquelle les dispositifs d'actionnement piézocéramiques (110-115, 120-155, 170-185) sont couplés avec au moins un capteur de position du fil.

8. Machine d'étincelage selon l'une quelconque des revendications précédentes, dans laquelle les dispositifs d'actionnement piézocéramiques (110-115, 120-155, 170-185) sont placés pour générer une vibration du fil.

9. Procédé de traitement d'étincelage d'une pièce à usiner (160) dans une machine d'étincelage selon l'une quelconque des revendications précédentes, pour lequel les têtes de guidage sphériques entraînées (10, 10') sont utilisées pour le positionnement du fil-électrode (30).
